# DEMANDE DE BREVET EUROPEEN

(11) **EP 4 016 157 A1**
(43) Date de publication de la demande: **22.06.2022**
(21) Numéro de dépôt: 21208589.8
(22) Date de dépôt: 16.11.2021
(51) Int. Cl.: G02B 6/44

(54) **CASSETTE DE STOCKAGE ET ÉPISSURAGE À FIBRES OPTIQUES, ORGANISEUR ET PROCÉDÉ D'AGENCEMENT ASSOCIÉS**

(30) Priorité: 17.12.2020 FR 2013572
(71) Demandeur: Nexans, 92400 Courbevoie (FR)
(72) Inventeur: JEAN, Jérémy, 08350 VRIGNE AUX BOIS (FR); PHILIPS, Guillaume, 08300 SAULT-LES-RETHEL (FR)
(74) Mandataire: Ipsilon

(57) **Abrégé**

Cassette (10) de stockage et épissurage de câbles à fibres optiques comportant un boîtier (100), le boitier comportant une région (R) dédiée au stockage de fibres optiques non utilisées et au moins un segment (102) de câble optique comportant une ou plusieurs fibres optiques. Le segment (102) de câble forme au moins une boucle (B) au moins partielle dans la région (R) du boîtier (100) dédiée au stockage de fibres optiques non utilisées.

## Description

La présente invention se rapporte à une cassette de stockage et épissurage à fibres optiques. Elle se rapporte également à un organiseur de câbles à fibres optiques comportant au moins une telle cassette, ainsi qu'à un procédé d'agencement d'un câble à fibres optiques dans une telle cassette.

L'invention appartient au domaine des câbles optiques, appelés aussi ici câbles à fibres optiques. Plus particulièrement, l'invention appartient au domaine des dispositifs et procédés permettant le rangement, l'acheminement, le raccordement et la répartition de tels câbles.

Il est connu en soi d'utiliser des cassettes de stockage et épissurage pour ce type d'opérations sur les câbles optiques.

Il est parfois nécessaire de réaliser une boucle en forme de « S », c'est-à-dire un demi-tour, avec une fibre optique dans une telle cassette de stockage et épissurage, afin d'acheminer la fibre dans la direction souhaitée.

Pour pouvoir réaliser ce « S », il convient de respecter le rayon de courbure de la fibre, qui varie selon le type de câble considéré.

A titre d'exemple nullement limitatif, une fibre optique monomode de type G.652D au sens de l'UIT-T (secteur de la normalisation des télécommunications de l'Union Internationale des Télécommunications) présente un rayon de courbure de 0,03 m.

Ainsi, l'intégration du « S » dans une cassette de stockage et épissurage nécessite que la cassette soit d'une taille suffisamment grande pour prendre en compte le rayon de courbure de la fibre.

Par exemple, on connaît par le document US-A-2009 0136195 une cassette de stockage et épissurage pour des câbles toronnés ou plats, dans laquelle le « S » peut se loger dans deux régions où une forme circulaire est aménagée.

Néanmoins, le diamètre de ces régions étant nécessairement supérieur ou égal au rayon de courbure du câble, cela conduit à augmenter la taille des cassettes.

Une augmentation des dimensions n'est pas souhaitable, en particulier au vu des contraintes d'installation sur site, qui limitent souvent considérablement l'encombrement maximal admissible des cassettes.

En outre, une augmentation de la taille des cassettes présente d'autres inconvénients. Elle augmente le coût de ces équipements et peut compromettre l'obtention de la forte densité de fibres habituellement requise.

La présente invention a pour but de remédier aux inconvénients précités de l'art antérieur.

Dans ce but, la présente invention propose une cassette de stockage et épissurage de câbles à fibres optiques, comportant :
un boîtier, comportant une région dédiée au stockage de fibres optiques non utilisées ;
au moins un segment de câble optique comportant une ou plusieurs fibres optiques ;
la cassette étant remarquable en ce que le segment de câble forme au moins une boucle au moins partielle dans la région du boîtier dédiée au stockage de fibres optiques non utilisées.

La mise à profit de la région du boîtier de la cassette normalement dédiée au stockage de fibres optiques non utilisées permet ainsi de ne pas augmenter la taille de la cassette, étant donné que la région dédiée au stockage de fibres optiques non utilisées est déjà adaptée au rayon de courbure des fibres optiques.

Cela réduit les coûts, facilite l'installation des fibres optiques et contribue à l'obtention d'une densité de fibres élevée.

Dans un mode particulier de réalisation, la boucle est en forme de « S » et correspond à un demi-tour de fibre optique.

Cela permet d'optimiser le cheminement de la fibre et de limiter la quantité de surlongueurs de fibre à gérer.

Dans un mode particulier de réalisation, le segment de câble est monofibre. Un tel type de câble est particulièrement souple et facile à loger dans la région dédiée au stockage de fibres non utilisées.

Dans le même but que celui indiqué plus haut, la présente invention propose également un organiseur de câbles à fibres optiques, remarquable en ce qu'il comporte au moins une cassette de stockage et épissurage de câbles à fibres optiques telle que succinctement décrite ci-dessus.

Dans un mode particulier de réalisation, l'organiseur comporte au moins deux cassettes de stockage et épissurage disposées en colonne.

Cet agencement est particulièrement avantageux pour gagner de la place et permettre un cheminement optimal des fibres.

Dans un mode particulier de réalisation, l'organiseur comporte N cassettes de stockage et épissurage, N étant un entier supérieur ou égal à 2.

Cela permet de loger dans l'organiseur un nombre de connexions à fibres optiques adapté à l'application considérée. L'organiseur conforme à la présente invention convient ainsi à des applications nombreuses et variées.

Dans le même but que celui indiqué plus haut, la présente invention propose également un procédé d'agencement d'un câble à fibres optiques dans une cassette de stockage et épissurage de câbles à fibres optiques telle que succinctement décrite ci-dessus, ce procédé étant remarquable en ce qu'il comporte une étape consistant à réaliser l'au moins une boucle au moins partielle dans la région précitée du boîtier dédiée au stockage de fibres optiques non utilisées.

Les caractéristiques particulières et les avantages de l'organiseur et du procédé étant similaires à ceux de la cassette, ils ne sont pas répétés ici.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :

[Fig. 1] est une représentation schématique d'un organiseur de câbles optiques monofibres conforme à la présente invention, dans un mode particulier de réalisation ;

[Fig. 2] est une vue schématique agrandie d'une cassette de stockage et épissurage de câble conforme à la présente invention, comprise dans un organiseur tel que celui de la figure 1.

[Fig. 3] est un organigramme montrant des étapes d'un procédé d'agencement d'un câbles à fibres optiques dans une cassette du type de la figure 2, dans un mode particulier de réalisation.

### Description de mode(s) de réalisation

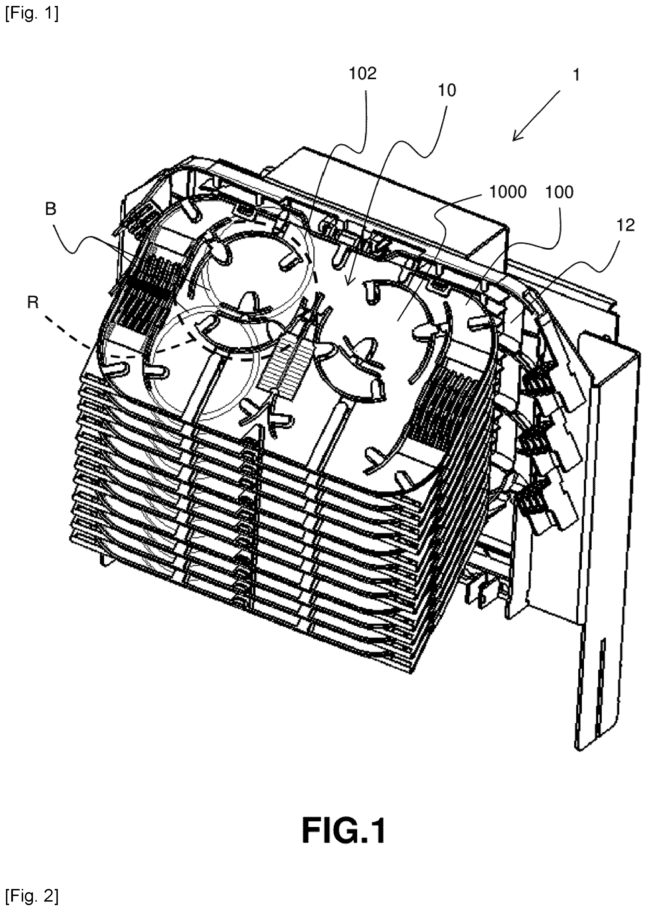

Comme le montre la figure 1, un organiseur 1 de câbles optiques conforme à la présente invention peut comporter une ou plusieurs cassettes 10 de stockage et épissurage de câbles à fibres optiques.

Dans le mode particulier de réalisation illustré, l'organiseur 1 comporte douze cassettes 10 de stockage et épissurage de câbles. Néanmoins, ce nombre de cassettes n'est qu'un exemple nullement limitatif, l'organiseur pouvant comporter soit moins, soit plus de cassettes et, par exemple, une seule cassette, ou bien N cassettes, N étant un entier supérieur ou égal à 2.

Avantageusement, lorsque l'organiseur 1 comporte plus d'une cassette 10, ces cassettes peuvent être disposées chacune à l'horizontale suivant leur plan principal et en colonne les unes par rapport aux autres, c'est-à-dire que l'ensemble des cassettes 10 forme un empilement vertical.

Cet agencement nécessite en effet peu de place en largeur.

Néanmoins, en variante, les cassettes 10 de l'organiseur 1 pourraient aussi bien être disposées chacune à la verticale, c'est-à-dire dans un plan perpendiculaire à leur plan principal et être agencées les unes à côté des autres, c'est-à-dire que l'organiseur 1 comporterait alors une rangée de cassettes 10, prenant peu de place en hauteur, mais nécessitant de l'espace en largeur.

Dans les deux modes de réalisation précédents, les cassettes 10 peuvent par ailleurs éventuellement, mais non nécessairement, être articulées sur au moins un de leur côtés, de façon connue en soi, sur un châssis 12. Dans le mode de réalisation de la figure 1, chaque cassette 10 est de forme sensiblement rectangulaire et est articulée sur un de ses plus grands côtés, par l'intermédiaire de formes complémentaires prévues sur la cassette 10 et sur le châssis 12, ces formes constituant une charnière.

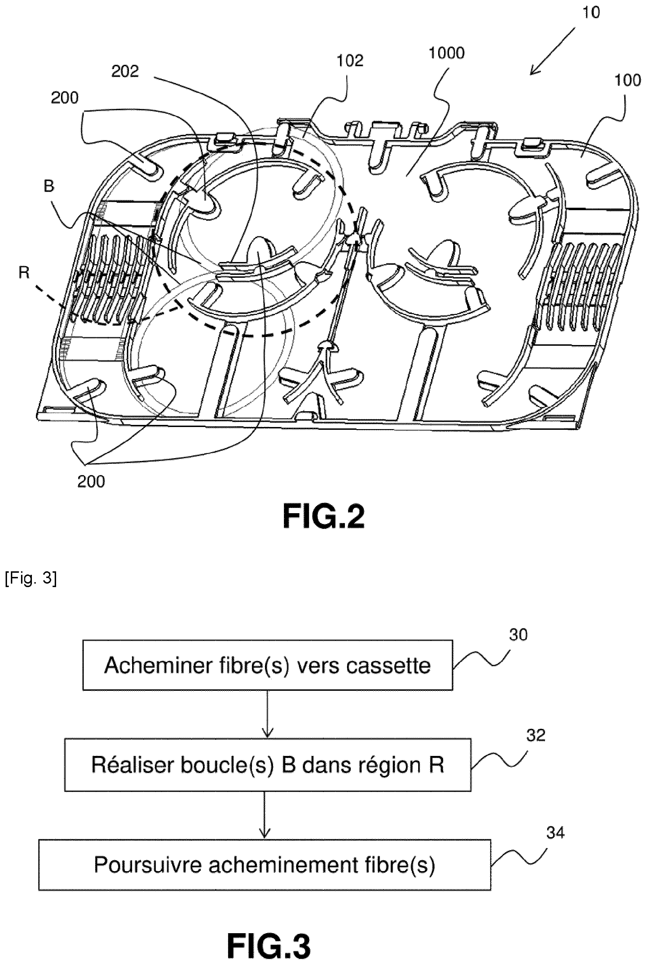

On décrit ci-après chaque cassette 10 plus en détails, en référence aux figures 1 et 2.

Une cassette 10 conforme à la présente invention comporte un boîtier 100. Le boîtier 100 présente une face 1000 qui forme la base (ou plateau) de la cassette 10 et qui définit le plan principal précité de la cassette 10.

Le boîtier 100 comporte sur la face 1000 une région R dédiée au stockage de fibres optiques non utilisées, raccordées ou en attente. La région R est localisée par des tirets sur la figure 1. La face 1000 présente un certain nombre d'éléments de guidage et de maintien, ayant pour fonction de guider et maintenir dans la cassette 10 les fibres optiques qui y cheminent. Une partie au moins de ces éléments de guidage et de maintien est située dans la région R.

Ces éléments de guidage et de maintien peuvent être réalisés sous forme de nervures et/ou gorges et/ou pattes. Le nombre, la forme et l'emplacement de ces éléments de guidage et de maintien peuvent varier et seront à définir selon les besoins et l'utilisation envisagée de la cassette 10.

La figure 2 illustre à titre d'exemple non limitatif des formes possibles pour des éléments de guidage et de maintien sous forme de pattes 200 et de nervures 202 réparties, également à titre d'exemple non limitatif, sur le pourtour intérieur de la face 1000 du boîtier 100 et au sein de la région R.

La cassette 10 comporte en outre au moins un segment 102 de câble optique, c'est-à-dire une partie d'un câble optique comportant une ou plusieurs fibres optiques, ce câble cheminant au sein de l'organiseur 1 et traversant notamment la cassette 10.

A titre d'exemple nullement limitatif, ce segment 102 de câble optique peut être monofibre, c'est-à-dire qu'il comporte une seule fibre optique. En variante, le segment 102 de câble optique peut être multifibre, c'est-à-dire comporter un faisceau formé d'un certain nombre de fibres optiques.

Conformément à la présente invention, ce segment 102 de câble forme au moins une boucle B, soit complète, c'est-à-dire une boucle fermée, soit partielle, c'est-à-dire une boucle ouverte, dans la région R habituellement dédiée au stockage de fibres optiques non utilisées, raccordées ou en attente.

A titre d'exemple nullement limitatif, dans le mode particulier de réalisation des figures 1 et 2, la boucle B est en forme de « S », ce qui correspond à un demi-tour de fibre optique qui peut être réalisé en particulier grâce aux pattes 200, qui maintiennent la fibre dans la cassette 10.

Comme le montre l'organigramme de la figure 3, un procédé conforme à l'invention consistant à agencer un câble à fibres optiques dans une cassette 10 comporte une première étape 30 au cours de laquelle on achemine la ou les fibres optiques vers la cassette 10, par exemple mais non nécessairement au sein de l'organiseur 1.

Puis lors d'une étape 32, conformément à la présente invention, on réalise l'au moins une boucle B au moins partielle précitée, dans la région R du boîtier 100 dédiée au stockage de fibres optiques non utilisées.

Enfin, lors d'une étape 34, on poursuit l'acheminement de la ou des fibres optiques dans la cassette 10 et hors de celle-ci de façon à réaliser les connexions voulues, selon l'application considérée.

## Revendications

1. Cassette (10) de stockage et épissurage de câbles à fibres optiques, comportant :
un boîtier (100), comportant une région (R) dédiée au stockage de fibres optiques non utilisées ;
au moins un segment (102) de câble optique comportant une ou plusieurs fibres optiques ;
ladite cassette étant **caractérisée en ce que** ledit segment (102) de câble forme au moins une boucle (B) au moins partielle dans ladite région (R) dudit
boîtier (100) dédiée au stockage de fibres optiques non utilisées.

2. Cassette (10) selon la revendication 1, **caractérisée en ce que** ladite boucle (B) est en forme de « S » et correspond à un demi-tour de fibre optique.

3. Cassette (10) selon la revendication 1 ou 2, **caractérisée en ce que** ledit segment (102) de câble est monofibre.

4. Organiseur (1) de câbles à fibres optiques, **caractérisé en ce qu'**il comporte au moins une cassette (10) de stockage et épissurage de câbles à fibres optiques selon l'une quelconque des revendications précédentes.

5. Organiseur (1) selon la revendication précédente, **caractérisé en ce qu'**il comporte au moins deux cassettes (10) de stockage et épissurage disposées en colonne.

6. Organiseur (1) selon la revendication 4 ou 5, **caractérisé en ce qu'**il comporte N cassettes (10) de stockage et épissurage, N étant un entier supérieur ou égal à 2.

7. Procédé d'agencement d'un câble à fibres optiques dans une cassette (10) de stockage et épissurage de câbles à fibres optiques selon l'une quelconque des revendications 1 à 3, **caractérisé en ce qu'**il comporte une étape consistant à réaliser ladite au moins une boucle (B) au moins partielle dans ladite région (R) dudit boîtier (100) dédiée au stockage de fibres optiques non utilisées.
